# EUROPEAN PATENT APPLICATION

(11) **EP 3 868 911 A1**
(43) Date of publication of application: **25.08.2021**
(21) Application number: 21155477.9
(22) Date of filing: 05.02.2021
(51) Int. Cl.: C22C 38/44, C22C 38/02, C22C 38/04, C22C 38/42, C22C 38/46, C22C 38/48, C22C 38/50, C22C 38/06, C21D 6/00, C21D 7/13, C21D 8/00, A47J 27/00

(54) **COMPOSITION OF HEAT-RESISTING STAINLESS STEEL USED FOR COOKING UTENSIL FOR HEATING FOOD**

(30) Priority: 21.02.2020 CN 202010106444
(71) Applicant: Qingdao Samkyung Metals Co., LTD., Qingdao-Si, Shandong 266200 (CN)
(72) Inventor: KIM, Hyun Ku, Seoul (KR); KIM, Hee June, Seoul (KR)
(74) Representative: Morris, Jonathan Paul

(57) **Abstract**

The present disclosure belongs to the field of a technology for producing stainless steel. The present disclosure is designed specifically for a heat-resisting stainless steel structure used for a cooking utensil for heating food. The main components of raw material in the order of mass percentage are as follows: chromium (Cr) 20 to 26%, nickel (Ni) 5 to 8%, molybdenum (Mo) 1 to 3%, carbon (C) 0.02 to 0.04%, silicon (Si) <1%, manganese (Mn) 0.7 to 1.1%, phosphorus (P) 0.01 to 0.05%, sulfur (S) 0.003 to 0.007%, copper (Cu) 0.08 to 0.3%, vanadium (V) 0.08 to 0.12%, niobium (Nb) 0.01 to 0.03%, titanium (Ti) 0.003 to 0.007%, aluminum (Al) 0.002 to 0.006%, and the remainder of iron and inevitable impurities. The cooking utensil of stainless steel alloy for heating, made by adjusting a blending ratio of each raw material among stainless steel materials, has strong resistance to corrosion and high temperature, heats up quickly, has high strength, and is not easy to be deform. In addition, the cooking utensil shortens cooking time and increases efficiency. Further, the cooking utensil is harmless to human body when cooking at high temperature, has good heat retention efficiency, and protects environment due to a recyclable material.

## Description

### [Technical Field]

The present disclosure belongs to the field of stainless steel production technology, and particularly relates to a heat-resisting stainless steel composition used for a cooking utensil for heating food, wherein the cooking utensil is a cooking utensil of a stainless steel alloy produced by adjusting a mixing ratio of three metal materials of chromium, nickel and molybdenum, and is harmless to human body when used in cooking.

### [Background of the invention]

Stainless steel is made of an iron-chromium alloy containing trace metal elements such as nickel, molybdenum, titanium, cadmium, and manganese and there are 304 stainless steel and 316 stainless steel as stainless steel materials available on the market. The 304 stainless steel, also called 18/8 stainless steel in the art, has a density of 7.93 g/cm³. The most important elements in the 304 stainless steel are nickel and chromium. Among them, a chromium content is 18.0 to 20.0%, and a nickel content is 8.0 to 11.0%. The 304 stainless steel is heat-resistant up to 800°c, has features of good processing performance and high rigidity, and is widely used in general industries, home decoration, and food and medical industries. 316 stainless steel is 18Cr-12Ni-2.5Mo, which is highly resistant to corrosion and atmospheric corrosion and has particularly good high temperature strength, due to the addition of molybdenum (Mo). The 316 stainless steel has good heat resistance and can withstand up to 1000°c and thus can be used in difficult conditions. In addition, the 316 stainless steel is used in seawater facilities and production facilities for products such as chemicals, dyes, paper, acetic acid, and fertilizers, etc., and furthermore in photography, food industry facilities, fixing facilities in coastal areas, ropes, CD rods, bolts, nuts, etc.

Existing stainless steel is used in more and more areas in the modern society due to its excellent properties, and especially the application in the food industry is becoming increasingly widespread. Wang Boso et al. disclosed the following in Wuhan University of Science and Technology: Natural Science Edition: solution of acetic acid and sodium chloride were received in a cooking utensil for food, made of 200 series of stainless steel 304 and 316L, and as a result comparing the affection of concentration of the solution, temperature, experiment time, Cl⁻ concentration, and stainless steel material, etc. on the elution of heavy metal elements from stainless steel, the elevation of a concentration of acetic acid and a temperature significantly increased a elution amount of main heavy metal ions from stainless steel; with the prolongation of the experiment time, all of the elution amounts of Cr, Mn and Pb elements from stainless steel showed an upward trend, but the change of the elution amount of elements such as Ni, Cd and As not noticeable; the presence of Cl⁻ promotes the release of heavy metal elements such as Cr and Mn from stainless steel, but the affection on the elution amount of other metal elements was not noticeable; and the elution amount of heavy metal elements after experiment for stainless steel of different materials was also different. Among them, stainless steel 316L is the most resistant to corrosion and is suitable for producing stainless steel dishware. But, stainless steel pots made directly of stainless 316L are not good in thermally conductive property and do not conduct electricity, so they cannot be used in induction. Due to the above-described problem, Chinese application No. 201710367059.8 disclosed a new method of producing a stainless steel pot with high thermal conductivity and compensated for the disadvantages of existing stainless steel pot such as low thermal conductivity, food-stuck tendency to the bottom when cooking, separation of a bottom layer of the pot, and heavy weight of the pot itself. The pot is a double structure, and filled with a molten salt conductor in the middle of the structure. The molten salt conductor is a mixture of molten salt and an active metal material, and the active metal material includes aluminum, magnesium, zinc, iron, nickel, or an alloy of these metals. The molten salt conductor acts as a positive electrode in an electric manner and can prevent or mitigate the corrosion of the stainless steel pot of molten salt, but has a low heat resistance; Chinese patent application No. 201310532589.5 discloses a coffee pot material made of stainless steel that is highly resistant to a type of corrosion, wherein the coffee pot material was composed of a chemical composition of the following mass percent: C 0.03 to 0.06%, Cr 16 to 20%, Si 0.8 to 1.2%, Mn 0.6 to 1%, Ni 2 to 3%, B 0.0001 to 0.002%, V 0.4 to 0.6%, Mo 3 to 4.5%, W 0.25 to 0.35%, N 0.18 to 0.22%, S ≤0.004%, P ≤0.014%, Ag 0.25 to 0.35%, Cu 2.5 to 3.5%, Ce 0.001 to 0.012%, La 0.03 to 0.08%, and the remainder of Fe and inevitable impurity elements, but has a disadvantage of low heat resistance.

Current food pots made of stainless steel materials still have disadvantages such as slow heating, poor heat resistance when dried, and harmful to human body when heated at high temperature. At this point in time, a new type of stainless steel material is urgently needed. A cooking utensil for food, which is made of this new material, needs to be quickly heated, be electrically conductive, have high heat resistance, and be harmless to human body.

### [Disclosure]

### [Technical Problem]

An object of the present disclosure is to overcome the shortcomings of the existing technology and seek to provide a new type of stainless steel that is electrically conductive, has strong heat resistance, and does not generate harmful substances when heated to high temperature. A new type of stainless steel is a stainless steel composition with strong heat resistance used for a kind of cooking utensil for heating food.

### [Technical solution]

The present invention relates to a stainless steel structure with strong heat resistance used for a cooking utensil for heating food, and is developed to achieve the object described above. The stainless steel composition of the present invention comprises the following main components of the raw material in the order of mass percentage: chromium (Cr) 20 to 26%, nickel (Ni) 5 to 8%, molybdenum (Mo) 1 to 3%, carbon (C) 0.02 to 0.04%, silicon (Si) <1%, manganese (Mn) 0.7 to 1.1%, phosphorus (P) 0.01 to 0.05%, sulfur (S) 0.003 to 0.007%, copper (Cu) 0.08 to 0.3%, vanadium (V) 0.08 to 0.12%, niobium (Nb) 0.01 to 0.03%, titanium (Ti) 0.003 to 0.007%, aluminum (Al) 0.002 to 0.006%, and the remainder of iron and inevitable impurities. The proportion of various materials directly affects the performance and use of the product.

The method for producing a stainless steel structure with strong heat resistance for used for a cooking utensil for heating food according to the present disclosure includes the following procedure:
(1) Mixing and melting raw materials to cast stainless steel ingots; at this time, one of vacuum induction furnace, non-vacuum melting, electric furnace + external refining, rotary furnace + external refining is used for melting;
(2) Steel ingot forging: a first stage temperature of 1100 to 1320°C, and an end stage temperature of 980 to 1030°C; and
(3) A heat treatment after forging: heat treatment is conducted in a heat treatment furnace. The temperature is 1050 to 1100°C and keeps warm for 30 to 60 min. The cooling procedure proceeds with either water cooling or air cooling; and a elution amount of a heavy metal in stainless steel thus obtained satisfies the following: arsenic (As) <0.004 mg/kg, cadmium (Cd) <0.002 mg/kg, lead (Pb) <0.005 mg/kg, chromium (Cr) <0.02 mg/kg, nickel (Ni) <0.05 mg/kg; the elution amount satisfies the limiting value defined by national standards, and the requirements of metal materials and products for food contact.

A description of the action of the main elements of each raw material of the present disclosure is as follows:
Chromium (Cr) is a main alloying element to increase material strength and corrosion resistance. Cr increases the resistance of local corrosion forces such as stress corrosion, partial corrosion and crevice corrosion in stainless steel's oxidizing acid and a chloride solution.

Nickel (Ni) is the second most important alloying element after chromium in stainless steel; the nickel promotes the stability of the dull film of stainless steel and increases thermodynamic stability; and thus, when nickel and chromium are combined, the mechanical performance, processing performance and defect resistance performance in corrosion media of stainless steel are greatly improved.

In addition to improving corrosion resistance, molybdenum (Mo) has its main function to enhance the secondary hardening effect by increasing hardness, which is particularly noticeable when quenched at low temperature. When molybdenum is combined with stainless steel, the effect that crystal particles are refined, structure is uniform, and toughness is improved can be exhibited, and precipitation of chromium carbide is suppressed. The complex action of molybdenum and chromium enhances dulling and re-dulling ability of stainless steel, increasing the stability of the dulling film. This makes corrosion resistance of the stainless steel good. The present disclosure adjusts the molybdenum content to 1 to 3%.

Carbon (C) shows two actions on the stainless steel. One is that C and Cr have very strong affinity, so they can be produced as a series of carbides. The higher the carbon content in the steel, the more chromium carbide is produced and the chromium content in the solid solution decreases, resulting in lower corrosion resistance of the steel; and thus, the carbon content in stainless steel is usually low. On the other hand, the strength of stainless steel increases with increasing carbon content. In view of this, the present disclosure adjusts the carbon content to 0.02 to 0.04%.

Silicon (Si) increases the resistance of stainless steel to high temperature and to corrosion in high concentrations of nitric acid and sulfuric acid. This is related to the property that silicon forms an oxide protective film on the surface of stainless steel. However, when the silicon content of stainless steel is excessive, the sensitivity of brittle properties such as σ and χ in the steel increases, resulting in lower plasticity and toughness of the steel, and lower corrosion resistance. Therefore, in view of this, the present disclosure adjusts the silicon content to <1%.

Copper (Cu) can increase the corrosion resistance of some stainless steels.

Manganese (Mn) does not act on forming austenite, but on lowering the critical quenching rate of steel. Upon cooling, the stability of austenite is increased, so that the austenite produced at high temperature is maintained at room temperature.

The main action of sulfur is to improve the cutting performance of stainless steel.

The action of titanium (Ti) or niobium (Nb) prevents interparticle corrosion.

### [Advantageous Effects]

In the present disclosure, compared with the existing technology, a cooking utensil of the stainless steel alloy for heating food, made by adjusting the blending ratio of each raw material in stainless steel materials satisfies the requirements for metal materials and products for food contact. When cooking food, the cooking utensil can be used in both gas ranges and induction, and has better resistance to corrosion and high temperature, compared with existing stainless steel. In addition, the cooking utensil is rapidly heated, is difficult to deform due to its high strength, and is highly efficient and harmless to human body when cooking at high temperature. Further, the cooking utensil has good thermal insulation effect and saves energy, and can be recycled to protect the environment.

### [Detailed description of the invention]

Hereinafter, a detailed description of the present invention will be described through specific examples.

### Example 1:

Main components of a stainless steel structure with strong heat resistance used for a cooking utensil of heating food in this example have the following contents in the order of mass percentage: chromium (Cr) 20%, nickel (Ni) 5%, molybdenum (Mo) 1%, carbon (C) 0.04%, silicon (Si) 0.81%, manganese (Mn) 0.7%, phosphorus (P) 0.05%, sulfur (S) 0.005%, copper (Cu) 0.1%, vanadium (V) 0.103%, niobium (Nb) 0.01%, titanium (Ti) 0.003%, aluminum (Al) 0.004%, and the remainder of iron and inevitable impurities; and the stainless steel thus obtained can withstand up to 1200°C and is suitable for use as a kitchen pot.

Pots having the same size and shape were made through facility method for producing a general stainless steel structure, by using the stainless steel of this example and commercially available 304 stainless steel. When the pot made in this example and the pot made of 304 stainless steel were heated at the same time to boil the same volume of water, each heating time was as follows: the stainless steel pot according to the present disclosure: 1 minute 20 seconds, the 304 stainless steel: 1 minute 50 seconds; and as a result of repeated heating experiments, the inner surface of the stainless steel of this example was still smooth and clean, and the inner surface of the 304 stainless steel pot became less smooth and had a small amount of white spots.

### Example 2:

Main components of the stainless steel structure with strong heat resistance used for a cooking utensil of heating food in this example includes the following contents in the order of mass percentage: chromium (Cr) 20%, nickel (Ni) 8%, molybdenum (Mo) 3%, carbon (C) 0.04%, silicon (Si) 0.83%, manganese (Mn) 0.7%, phosphorus (P) 0.02%, sulfur (S) 0.003%, copper (Cu) 0.08%, vanadium (V) 0.101%, niobium (Nb) 0.01%, titanium (Ti) 0.003%, aluminum (Al) 0.003%, and the remainder of iron and inevitable impurities; and compared with Example 1, in this example mainly the content of nickel and molybdenum was increased. As a result, resistance to dilute sulfuric acid, organic acids (acetic acid, formic acid, and oxalic acid), hydrogen sulfide, and seawater was improved. This stainless steel of this example is suitable for use as a sealed cooking utensil for seafood.

### Example 3:

Main components of the stainless steel structure with strong heat resistance used for a cooking utensil of heating food in this example are as follows in the order of mass percentage: chromium (Cr) 22%, nickel (Ni) 5%, molybdenum (Mo) 1%, carbon (C) 0.02%, silicon (Si) 0.9%, manganese (Mn) 0.7%, phosphorus (P) 0.01%, sulfur (S) 0.003%, copper (Cu) 0.3%, vanadium (V) 0.099%, niobium (Nb) 0.03%, titanium (Ti) 0.007%, aluminum (Al) 0.006%, and the remainder of iron and inevitable impurities; and compared with Example 1, in this example the content of chromium was increased to increase the resistance to corrosion and high temperature. The stainless steel of this example is suitable for use as a marine stainless steel cooking tool by improving the performance to prevent interparticle corrosion by increasing the content of niobium and titanium, simultaneously with lowering the carbon content.

Pots having the same size and shape were made through a facility method for producing general stainless steel structure, by using this example and commercially available 304 stainless steel. A result of repeated long-term use on a marine fishing boat or ship, the inner surface of the stainless steel of this example has no rust, and the inner surface of the 304 stainless steel produced a small amount of rust.

### Example 4:

Main components of the stainless steel structure with strong heat resistance used for a cooking utensil of heating food in this example are as follows in the order of mass percentage: chromium (Cr) 24%, nickel (Ni) 6%, molybdenum (Mo) 3%, carbon (C) 0.03%, silicon (Si) 0.82%, manganese (Mn) 1%, phosphorus (P) 0.025%, sulfur (S) 0.006%, copper (Cu) 0.2%, vanadium (V) 0.087%, niobium (Nb) 0.017%, titanium (Ti) 0.005%, aluminum (Al) 0.005%, and the remainder of iron and inevitable impurities. Compared with Example 2, in this example, the content of chromium and manganese was increased and the content of nickel was lowered, thereby increasing the resistance to high temperature and abrasion of stainless steel. The stainless steel of this example is suitable for use in cooking pots.

Pots having the same size and shape were made through a facility method for producing general stainless steel structure, by using this example and commercially available 304 stainless steel. As a result of repeated long-term use with the same cooking method, the inner surface of the stainless steel of this example has no change of color and no scratch, and the inner surface of the pot of the 304 stainless steel turned yellow and scratched.

### Example 5:

Main components of the stainless steel structure with strong heat resistance used for a cooking utensil of heating food in this example are as follows in the order of mass percentage: chromium (Cr) 26%, nickel (Ni) 6%, molybdenum (Mo) 2%, carbon (C) 0.025%, silicon (Si) 0.79%, manganese (Mn) 1.1%, phosphorus (P) 0.03%, sulfur (S) 0.005%, copper (Cu) 0.25%, vanadium (V) 0.093%, niobium (Nb) 0.02%, titanium (Ti) 0.006%, aluminum (Al) 0.0042%, and the remainder of iron and inevitable impurities. Compared with Example 4, in this example the chromium content was increased, thereby increasing the resistance of stainless steel to corrosion and high temperature. The stainless steel of this example withstands high temperature resistance up to 1600°C and is suitable for use as a barbecue grill.

Pots having the same size and shape were made through a facility method for producing general stainless steel structure, by using this example and commercially available 304 stainless steel. When they were used with the same time at the same cooking temperature, the bottom plate of the 304 stainless steel pot had a protruding deformation, and the stainless steel pot of this example had no deformation.

### Example 6:

Main components of the stainless steel structure with strong heat resistance used for a cooking utensil of heating food in this example are as follows in the order of mass percentage: chromium (Cr) 26%, nickel (Ni) 5%, molybdenum (Mo) 3%, carbon (C) 0.02%, silicon (Si) 0.89%, manganese (Mn) 0.9%, phosphorus (P) 0.04%, sulfur (S) 0.003% to 0.007%, copper (Cu) 0.12%, vanadium (V) 0.088%, niobium (Nb) 0.023%, titanium (Ti) 0.004%, aluminum (Al) 0.0025%, and the remainder of iron and inevitable impurities.

### Example 7:

Main components of the stainless steel structure with strong heat resistance used for a cooking utensil of heating food in this example are as follows in the order of mass percentage: chromium (Cr) 23%, nickel (Ni) 8%, molybdenum (Mo) 3%, carbon (C) 0.03%, silicon (Si) 0.91%, manganese (Mn) 0.8%, phosphorus (P) 0.02%, sulfur (S) 0.007%, copper (Cu) 0.19%, vanadium (V) 0.12%, niobium (Nb) 0.01%, titanium (Ti) 0.006%, aluminum (Al) 0.006%, and the remainder of iron and inevitable impurities.

### Example 8:

Main components of the stainless steel structure with strong heat resistance used for a cooking utensil of heating food in this example are as follows in the order of mass percentage: chromium (Cr) 23%, nickel (Ni) 5%, molybdenum (Mo) 1%, carbon (C) 0.035%, silicon (Si) 0.86%, manganese (Mn) 1.1%, phosphorus (P) 0.01%, sulfur (S) 0.005%, copper (Cu) 0.25%, vanadium (V) 0.08%, niobium (Nb) 0.02%, titanium (Ti) 0.007%, aluminum (Al) 0.002%, and the remainder of iron and inevitable impurities.

### Example 9:

This example is a method for producing a stainless steel structure having strong heat resistance used for a cooking utensil for heating food described in Examples 1 to 8, as follows:
(1) Melting the mixed raw materials of chemical or metal components described to produce stainless steel ingots; at this time, one of vacuum induction furnace, non-vacuum melting, electric furnace + external refining, rotary furnace + external refining was used for melting;
(2) Forging stainless steel ingot: a first stage temperature of 1100 to 1320°C, and an end stage temperature of 980 to 1030°C
(3) Heat treatment after forging: a heat treatment was conducted in a heat treatment furnace. The temperature was 1050 to 1100°C and the duration time was 30 to 60 min. A cooling manner was either water cooling or air cooling.

### Example 10:

This example is a result obtained by measuring an elution amount of the metal in the stainless steel structures of Examples 1 to 8.

**[Table 1]**

| Measurement result of elution amount of metal in stainless steel | | | | | | |
|---|---|---|---|---|---|---|
| Examination items | | Arsenic (As) | Cadmium (Cd) | Lead (Pb) | Chromium (Cr) | Nickel (Ni) |
| Standard limited amount | | 0.04 mg/kg | 0.02 mg/kg | 0.05 mg/kg | 2.0 mg/kg | 0.5 mg/kg |
| Examination limited amount | | 0.004 mg/kg | 0.002 mg/kg | 0.005 mg/kg | 0.2 mg/kg | 0.05 mg/kg |
| Examination Result | Example 1 | Not detected | Not detected | Not detected | Not detected | Not detected |
| | Example 2 | Not detected | Not detected | Not detected | Not detected | Not detected |
| | Example 3 | Not detected | Not detected | Not detected | Not detected | Not detected |
| | Example 4 | Not detected | Not detected | Not detected | Not detected | Not detected |
| | Example 5 | Not detected | Not detected | Not detected | Not detected | Not detected |
| | Example 6 | Not detected | Not detected | Not detected | Not detected | Not detected |
| | Example 7 | Not detected | Not detected | Not detected | Not detected | Not detected |
| | Example 8 | Not detected | Not detected | Not detected | Not detected | Not detected |

As shown in Table 1, in Example 1 to 8, heavy metals arsenic (As) and cadmium (Cd), lead (Pb), chromium (Cr) and nickel (Ni) were not detected, and all of them were lower than the examination limited amount. Test for elution material detection in the stainless steel was carried out by SGS Standard Technology Service (Qingdao) Co., Ltd. According to the national standard GB 4806.9-2016 of the People's Republic of China. The values are well below the limits of national standard regulations and satisfies the "food grade" condition.

## Claims

1. A composition of a heat-resisting stainless steel used for a cooking utensil for heating food, comprising chromium (Cr) 20 to 26%, nickel (Ni) 5 to 8%, molybdenum (Mo) 1 to 3%, carbon (C) 0.02 to 0.04%, silicon (Si) <1%, manganese (Mn) 0.7 to 1.1%, phosphorus (P) 0.01 to 0.05%, sulfur (S) 0.003 to 0.007%, copper (Cu) 0.08 to 0.3%, vanadium (V) 0.08 to 0.12%, niobium (Nb) 0.01 to 0.03%, titanium (Ti) 0.003 to 0.007%, aluminum (Al) 0.002 to 0.006%, and the remainder of iron and inevitable impurities, wherein components of raw materials are expressed as mass percentage.

2. The composition of claim 1, wherein a elution amount of a heavy metal in the stainless steel produced with the content satisfies arsenic (As) <0.004 mg/kg, cadmium (Cd) <0.002 mg/kg, lead (Pb) <0.005 mg/kg, chromium (Cr) <0.02 mg/ kg, nickel (Ni) <0.05 mg/kg, and the elution amount satisfies a limit specified by national standard and a requirement of a metal material and a product for food contact.

3. The composition of claim 1, wherein the stainless steel produced with the content has a temperature resistance of 1700°C.
